# EUROPÄISCHE PATENTANMELDUNG

(11) **EP 4 112 686 A1**
(43) Veröffentlichungstag der Anmeldung: **04.01.2023**
(21) Anmeldenummer: 21182922.1
(22) Anmeldetag: 30.06.2021
(51) Int. Cl.: C08L 11/00, C08L 79/02, C08K 5/00

(54) **KAUTSCHUKMISCHUNGEN ENTHALTEND POLYETHYLENIMIN**

(71) Anmelder: LANXESS Deutschland GmbH, 50569 Köln (DE)
(72) Erfinder: ALBERS, Antonia, 50677 Köln (DE); OPRISONI, Christian, 68723 Oftersheim (DE)

(57) **Zusammenfassung**

Die Erfindung betrifft neue Kautschukmischungen auf Basis von Polychlorprenkautschuk und Polyethylenimin, deren Herstellung, Verwendung und die dadurch erhältlichen Vulkanisate.

## Beschreibung

Die Erfindung betrifft neue Kautschukmischungen auf Basis von Polychloroprenkautschuk und Polyethylenimin, Verfahren zu deren Herstellung und deren Verwendung zur Herstellung von Kautschukvulkanisaten nach dem Vulkanisationsverfahren und daraus erhältlichen Formkörpern, insbesondere in Form von technischen Vulkanisaten wie zum Beispiel Schläuchen, Kabelummantelungen oder Riemen.

Polychloroprene sind wertvolle Kautschuke, die in vielen Gebieten Verwendung finden.

Es ist bekannt Polychloropren (CR) bei der Vulkanisation mit Hilfe bestimmter Vernetzungsmittel zu vernetzen, um so die Eigenschaften des Vulkanisates, wie zum Beispiel mechanische Eigenschaften oder Reversionsstabilität, zu verbessern.

Seit langem ist es gängige Praxis Ethylenthioharnstoff (ETU) als Vernetzungsmittel einzusetzen. Ethylenthioharnstoff wird allerdings von der European Chemicals Agency (ECHA) für manche Anwendungen als toxikologisch problematisch eingestuft.

Als Alternative zu Ethylenthioharnstoff (ETU) wird auch 3-Methyl-thiazolidin-2-thion (MTT) als Vernetzer eingesetzt. Nachteilig dabei ist eine Verschlechterung der mechanischen Eigenschaften im Vergleich zu ETU, sowie eine Verkürzung der Mooney Scorch Zeiten in einigen Chloropren Typen. Dieser Nachteil gegenüber ETU vergrößert sich mit steigenden Vulkanisationstemperaturen über Werte von 180 bis 200 °C.

Aus der WO 2016/030469 sind Kautschukmischungen, bekannt, die im Wesentlichen Guanidin-frei sind. Dort wurde das, als schnell vernetzender Sekundärbeschleuniger dienende, toxikologisch aber problematische Guanidin durch Polyethylenimin ersetzt. Insbesondere in Naturkautschuken wird dort Polyethylenimin in Kombination mit Schwefel, Sulfenamiden und Mercaptobenzothiazolen eingesetzt.

Generell bietet die Vernetzung von Kautschuken mit Schwefel-Beschleuniger-Systemen den Vorteil, dass durch die Verwendung unterschiedlicher Beschleuniger und deren Kombinationen die Verarbeitungs- und Produkteigenschaften über einen weiten Bereich variiert werden können, wie beispielsweise die Einstellung der Induktionsperiode (Scorch-Zeit, welche möglichst nicht zu kurz ausfallen soll) und der Reaktionsgeschwindigkeit die vorzugsweise hoch ist und dadurch zu einer kurzen Ausvulkanisationszeit führt. Zur Regulierung der Induktions- und Vulkanisationszeit, können den Kautschukmischungen sogenannte Zweitbeschleuniger zugesetzt werden.

Aufgabe der vorliegenden Erfindung war es Kautschukmischungen auf Basis von Polychloropren (CR) und toxikologisch unbedenklichen Vernetzungsmitteln bereit zu stellen.

Es wurde gefunden, dass Kautschukmischungen auf Basis von Polychloropren (CR) und Polyethylenimin als Vernetzungsmittel die oben genannten Nachteile überwinden.

Die erfindungsgemäßen Kautschukmischungen verfügen überraschender Weise zudem über eine verbesserte physikalische Stabilität bezüglich Veränderungen in der Vulkanisationstemperatur. Außerdem zeichnen sich die aus den erfindungsgemäßen Kautschukmischungen hergestellten Vulkanisate durch verbesserte Alterungsbeständigkeit gegenüber dem Einfluss von Oxidationsmitteln wie Ozon oder Sauerstoff aus.

Die vorliegende Erfindung betrifft daher Kautschukmischungen enthaltend mindestens einen Polychloroprenkautschuk (CR) und mindestens ein Polyethylenimin.

Im Folgenden steht die Einheit "phr" für Gewichtsteile bezogen auf 100 Gewichtsteile der Gesamtmenge an in der Kautschukmischung enthaltenem Polychloroprenkautschuk.

Die erfindungsgemäßen Kautschukmischungen enthalten Polyethylenimin im Allgemeinen in einer Menge von 0,01 bis 20 phr, bevorzugt von 0,05 bis 15 phr, besonders bevorzugt von 0,5 bis 10 phr, ganz besonders bevorzugt von 1 bis 8 phr und insbesondere von 2 bis 6 phr.

Die erfindungsgemäßen Kautschukmischungen enthalten mindestens einen **Polychloroprenkautschuk** (CR).

Polychloroprenkautschuk (CR) und dessen Herstellung ist seit langem bekannt. Es handelt sich um ein Polymer basierend auf 2-Chlor-1,3-butadien (Chloropren), das durch Emulsionspolymerisation erhältlich ist.

Prinzipiell können die erfindungsgemäßen Kautschukmischungen alle gängigen Polychlorprenkautschuke enthalten.

Die handelsüblichen Polychloroprenkautschuk Typen unterscheiden sich hinsichtlich ihrer Struktur und Eigenschaften. Bei den sogenannten Universaltypen wird auf Grund des, bei der Polymerisation verwendeten, Reglers zwischen mercaptan-modifizierten und xanthogenat-modifizierten Typen unterschieden. Diese beiden Typen existieren als unvernetzte sowie als vorvernetzte Varianten. Darüber hinaus werden Schwefel-modifizierte CR-Typen angeboten. Zusätzlich werden die verschiedenen Polychloropren Typen vor allem hinsichtlich ihrer Mooney-Viskositäten (ML (1+4), 100 °C) und ihrer Kristallisationsgeschwindigkeiten charakterisiert.

Vorzugsweise enthalten die erfindungsgemäßen Kautschukmischungen mindestens einen Polychloroprenkautschuk aus der Reihe der mercaptan- oder xanthogenat-modifizierten Polychlorprenkautschuke.

Mercaptan- und xanthogenat-modifizierte Polychlorprenkautschuke sind als Handelsprodukte erhältlich, beispielsweise unter dem Handelsnamen Baypren^{®} (Handelsprodukt der Fa. Arianxeo).

Mercaptan-modifizierte Polychloroprenkautschuke werden üblicherweise hergestellt durch Emulsionspolymerisation von Chloropren in Gegenwart von n-Dodecylmercaptan. Xanthogenat-modifizierte Polychloroprenkautschuke werden üblicherweise hergestellt durch Emulsionspolymerisation von Chloropren in Gegenwart von Xanthogendisulfiden.

Vorzugsweise enthalten die erfindungsgemäßen Kautschukmischungen mindestens einen mercaptan-modifizierte Polychlorprenkautschuk mit Mooney-Viskositäten (ML (1+4), 100 °C) zwischen 35 und 50 MU ("Mooney Units") und sehr langsamen bis mittleren Kristallisationsgeschwindigkeiten und/oder mindestens einen mercaptan-modifizierten Polychlorprenkautschuk mit einer Mooney-Viskosität zwischen 90 und 120 MU und einer mittleren Kristallisationsgeschwindigkeit.

Die erfindungsgemäß bevorzugten mercaptan-modifizierten Polychloroprenkautschuke mit mit Mooney-Viskositäten (ML (1+4), 100 °C) zwischen 35 und 50 MU und sehr langsamen bis mittleren Kristallisationsgeschwindigkeiten sind z.B. als Handelsprodukte der Fa. Arlanxeo unter der Bezeichnung Baypren^{®} 110, Baypren^{®}112, Baypren^{®}210 und Baypren^{®} 211 erhältlich. Die ebenfalls erfindungsgemäß bevorzugten mercaptan-modifizierten Polychloroprenkautschuke mit einer Mooney-Viskosität zwischen 90 und 120 MU und einer mittleren Kristallisationsgeschwindigkeit sind z.B. als Handelsprodukt der Fa. Arlanxeo unter der Bezeichnung Baypren^{®} 230 erhältlich.

Vorzugsweise enthalten die erfindungsgemäßen Kautschukmischungen mindestens einen mercaptan-modifizierte Polychlorprenkautschuk mit einer Molmassenverteilung (Mw/Mn) im Bereich von 2 bis 3, einer mittleren Molmasse (Mw) zwischen 4 · 10⁵ und 1,3 · 10⁶ g/Mol und einer Mooney-Viskosität zwischen 35 und 120 MU.

Die in den erfindungsgemäßen Kautschukmischungen enthaltenen Polychloroprene können einen unterschiedlichen 1,4-trans-Gehalt aufweisen. Dieser liegt bevorzugt zwischen 88 und 94 %.

Die erfindungsgemäßen Kautschukmischungen enthalten mindestens ein **Polyethylenimin.** Vorzugsweise handelt es sich bei den in den erfindungsgemäßen Kautschukmischungen enthaltenen Polyethyleniminen (PEI) um Homopolymer(e) des Ethylenimins bzw. Copolymer(e) von Ethylenimin und einem oder mehreren Comonomeren, wobei bei den Copolymeren der Anteil der von Ethylenimin abstammenden Wiederholungeinheiten jeweils bezogen auf die Gesamtmasse des Polymers mindestens 50 Gew.-%, bevorzugt mindestens 80 Gew.-%, weiter bevorzugt mindestens 90 Gew.-%, besonders bevorzugt mindestens 95 Gew.-%, und ganz besonders bevorzugt mindestens 98 Gew.-% beträgt. Der Ausdruck Polyethylenimin umfasst dabei auch Mischungen von Homo- und/oder Copolymeren des Ethylenimins beispielsweise mit verschiedenen Molekulargewichten, Verzweigungsgraden, Comonomeren usw.

Typischerweise haben solche Homo- oder Copolymere ein gewichtsgemitteltes Molekulargewicht Mw größer 200, bevorzugt von 300 bis 3.000.000, besonders bevorzugt von 400 bis 800.000, ganz besonders bevorzugt von 500 bis 100.000, weiter bevorzugt von 600 bis 30.000 und meist bevorzugt von 700 bis 7.000.

Die in den erfindungsgemäßen Kautschukmischungen enthaltenen Polyethylenimine können eine lineare oder verzweigte Struktur aufweisen, auch Mischungen von linearen und verzweigten Polyethyleniminen können eingesetzt werden.

In einer bevorzugten Ausführungsform werden Polyethylenimine mit verzweigter Struktur, welche sowohl primäre als auch sekundäre und tertiäre Aminogruppen aufweisen, eingesetzt.

Vorzugsweise enthalten die erfindungsgemäßen Kautschukmischungen Ethylendiamin-Ethylenimin-Copolymere bzw. Polyethylenimin Homopolymere, beispielsweise diejenigen gemäß CAS-Nummern 25987-06-8 und 9002-98-6.

Die erfindungsgemäßen Kautschukmischungen können einen oder mehrere **Füllstoffe** enthalten.

Prinzipiell eigenen sich alle aus dem Stand der Technik für diesen Zweck bekannten Füllstoffe, wobei die aktiven oder verstärkenden Füllstoffe bevorzugt sind.

Die erfindungsgemäßen Kautschukmischungen enthalten im Allgemeinen 0,1 bis 250 phr, vorzugsweise 20 bis 200 phr und besonders bevorzugt 25 bis 160 phr an mindestens einem Füllstoff.

Bevorzugt enthalten die erfindungsgemäßen Kautschukmischungen mindestens einen hydroxylgruppenhaltigen oxidischen Füllstoff und/oder mindestens einen Ruß

Im Allgemeinen beträgt der Gehalt an hydroxylgruppenhaltigen oxidischen Füllstoffen in den erfindungsgemäßen Kautschukmischungen 0,1 bis 250 phr, vorzugsweise 1 bis 200 phr, besonders bevorzugt 5 bis 180 phr und ganz besonders bevorzugt 10 bis 160 phr.

Als hydroxylgruppenhaltige oxidische Füllstoffe eignen sich bevorzugt solche aus der Reihe der
- Kieselsäuren, insbesondere Fällungskieselsäuren oder pyrogene Kieselsäuren, mit spezifischen Oberflächen von 5 bis 1000, vorzugsweise 20 bis 400 m²/g (BET-Oberfläche) und mit Primärteilchengrößen von 10 bis 400 nm, wobei die Kieselsäuren gegebenenfalls auch als Mischoxide mit anderen Metalloxiden wie Al-, Mg-, Ca-, Ba-, Zn-, Zr-, Ti-Oxiden vorliegen;
- synthetische Silikate, wie Aluminiumsilikat, Erdalkalisilikate wie Magnesium- oder Calciumsilikat, mit BET-Oberflächen von 20 bis 400 m²/g und Primärteilchengrößen von 10 bis 400 nm;
- natürliche Silikate, wie Kaolin und andere natürliche vorkommende Kieselsäuren.
sowie Mischungen davon.

Bei den in den erfindungsgemäßen Kautschukmischungen enthaltenen hydroxylgruppenhaltigen oxidischen Füllstoffen aus der Reihe der Kieselsäuren handelt es sich bevorzugt um solche die z.B. durch Fällung von Lösungen von Silikaten oder Flammenhydrolyse von Siliciumhalogeniden hergestellt werden können.

Bevorzugt enthalten die erfindungsgemäßen Kautschukmischungen mindestens einen hydroxylgruppenhaltigen oxidischen Füllstoff aus der Reihe der Kieselsäuren mit einer spezifischen Oberfläche (BET) im Bereich von 20 bis 400 m²/g in einer Menge von 0,1 bis 200 phr, bevorzugt 5 bis 200 phr, besonders bevorzugt von 10 bis 100 phr und ganz besonders bevorzugt von 20 bis 80 phr.

Alle Angaben zur BET beziehen sich auf die spezifische Oberfläche gemessen nach DIN 66131. Die Angaben zur Primärteilchengröße beziehen sich auf mittels Rasterelektronenmikroskop ermittelte Werte.

Die erfindungsgemäßen Kautschukmischungen können als Füllstoff weiterhin mindestens einen **Ruß** enthalten.

Erfindungsgemäß bevorzugt sind Ruße die nach dem Flammruß-, Furnace- oder Gasrußverfahren erhältlich sind und die eine spezifische Oberfläche (BET) im Bereich von 20 bis 200 m²/g besitzen, wie z.B. SAF-, ISAF-, IISAF-, HAF-, FEF- oder GPF-Ruße. Bevorzugt enthalten die erfindungsgemäßen Kautschukmischungen mindestens einen Ruß mit einer spezifische Oberfläche (BET) im Bereich von 20 bis 200 m²/g .

Die erfindungsgemäßen Kautschukmischungen enthalten im Allgemeinen 0,1 bis 200 phr, vorzugsweise 5 bis 150 phr, besonders bevorzugt 20 bis 120 phr an mindestens einem Ruß.

Sofern die erfindungsgemäßen Kautschukmischungen als Füllstoffe Ruß und kieselsäurebasierende Füllstoffe enthalten, so beträgt die Gesamtmenge dieser beiden Füllstoffe vorzugsweise 10 bis 200 phr, besonders bevorzugt 15 bis 160 phr.

Die erfindungsgemäßen Kautschukmischungen können als Füllstoff außer den genannten Füllstoffen mindestens einen weiteren Füllstoff, wie zum Beispiel Kurzfasern aus Aramid, Zellulose oder Nanozellulose, sowie Füllstoffe basierend auf Lignin, enthalten.

Der Gesamtanteil an diesen genannten zusätzlichen Füllstoffen in der erfindungsgemäßen Kautschukmischung beträgt typischerweise von 0,1 bis 160 phr, vorzugsweise 0,5 bis 100 phr, besonders bevorzugt 1 bis 50 phr.

Die erfindungsgemäßen Kautschukmischungen können ein oder mehrere **Verstärkungsadditive** enthalten.

Vorzugsweise enthalten die erfindungsgemäßen Kautschukmischungen mindestens ein Verstärkungsadditiv aus der Reihe der schwefelhaltigen organischen Silane, insbesondere der Alkoxysilylgruppen-haltigen schwefelhaltigen Silane und ganz besonders bevorzugt der Trialkoxysilylgruppen-haltigen schwefelhaltigen organischen Silane.

Besonders bevorzugt enthalten die erfindungsgemäßen Kautschukmischungen ein oder mehrere schwefelhaltige Silane aus der Reihe Bis-(triethoxysilylpropyl)-tetrasulfan, Bis-(triethoxysilylpropyl -disulfan und 3-(Triethoxysilyl)-1-propanthiol.

Die erfindungsgemäßen Kautschukmischungen enthalten im Allgemeinen 1 bis 20 Gew.-Teile, vorzugsweise 2 bis 15 Gew.-Teile und besonders bevorzugt 2 bis 10 Gew.-Teile an mindestens einem Verstärkungsadditiv jeweils berechnet als 100%iger Wirkstoff und bezogen auf 100 Gew.-Teile an insgesamt in der Kautschukmischung enthaltene Füllstoffe.

Flüssige Schwefelhaltige Silane können zur besseren Dosierbarkeit und/oder Dispergierbarkeit auf einem Träger aufgezogen werden (dry liquid). Der Gehalt an schwefelhaltigen Silanen in diesen "dry liquids" liegt vorzugsweise zwischen 30 und 70 Gew.-Teilen, bevorzugt 40 und 60 Gew.-Teilen je 100 Gew.-Teile dry liquid.

In einer bevorzugten Ausführungsform enthalten die erfindungsgemäßen Kautschukmischungen 5 bis 200 phr, besonders bevorzugt 10 bis 100 phr, und ganz besonders bevorzugt 20 bis 80 phr an mindestens einem hydroxylgruppenhaltigen oxidischen Füllstoff aus der Reihe der Kieselsäuren und 1,0 bis 20 phr, vorzugsweise 5 bis 15 phr und besonders bevorzugt 2 bis 10 phr an mindestens einem Verstärkungsadditiv aus der Reihe der schwefelhaltigen organischen Silane, besonders bevorzugt Alkoxysilylgruppen-haltigen schwefelhaltigen organischen Silane und ganz besonders bevorzugt der Trialkoxysilylgruppen-haltigen schwefelhaltigen organischen Silane."

Die erfindungsgemäßen Kautschukmischungen können einen oder mehrere **Vernetzer** enthalten.

Bei der Vulkanisation von Polychloroprenkautschuken werden insbesondere Metalloxide eingesetzt um die Vernetzung zu unterstützen und um Chlorwasserstoffgas, das bei der Vernetzungsreaktion entsteht, zu neutralisieren. Als Metalloxide eignen sich prinzipiell Magnesiumoxid, Zinkoxid, Bleioxid und Gemische davon.

Vorzugsweise enthalten die erfindungsgemäßen Kautschukmischungen mindestens einen Vernetzer aus der Reihe der Metalloxide, insbesondere Magnesiumoxid und/oder Zinkoxid.

Die erfindungsgemäßen Kautschukmischungen enthalten im Allgemeinen 0,1 bis 10 phr, vorzugsweise 0,1 bis 8 phr und besonders bevorzugt von 0,1 bis 5 phr an mindestens einem Metalloxid.

Die erfindungsgemäßen Kautschukmischungen können einen oder mehrere **Vulkanisationsbeschleuniger oder Vulkanisationsverzögerer** enthalten.

Dabei handelt es sich um Vulkanisationsbeschleuniger oder -verzögerer aus der Reihe der Merkaptobenzothiazole, Merkaptobenzoimidazole, Thiazolsulfenamide, Thiurame, Thiocarbamate, Tolytriazole, Xanthogenate und Thiophosphate.

Die erfindungsgemäßen Kautschukmischungen enthalten im Allgemeinen 0 bis 10 phr, bevorzugt 0 bis 8 phr und besonders bevorzugt 0 bis 5 phr an mindestens einem Vulkanisationsbeschleuniger oder -verzögerer.

Die erfindungsgemäßen Kautschukmischungen können weiterhin ein oder mehrere **Kautschukhilfsmittel** enthalten.

Als Kautschukhilfsmittel kommen beispielsweise Haftsysteme, Alterungsschutzmittel, Wärmestabilisatoren, Lichtschutzmittel, Antioxidantien, insbesondere Ozonschutzmittel, Flammschutzmittel, Verarbeitungshilfsmittel, Schlagzähfestigkeitsverbesserer, Faktisse, Weichmacher, Tackifier, Treibmittel, Farbstoffe, Pigmente, Wachse, Streckmittel, organische Säuren, Verzögerer, Aktivatoren und Reversionsschutzmittel in Frage.

Diese Kautschukhilfsmittel können den erfindungsgemäßen Kautschukmischungen in den für diese Hilfsmittel üblichen Mengen, die sich auch nach dem Verwendungszweck der daraus hergestellten Vulkanisate richten, zugesetzt werden. Übliche Mengen sind beispielsweise 0,1 bis 30 phr.

Als Alterungsschutzmittel werden bevorzugt alkylierte Phenole, styrolisiertes Phenol, sterisch gehinderte Phenole wie 2,6-Di-tert.-butylphenol, 2,6-Di-tert-butyl-p-kresol (BHT), 2,6-Di-tert.-butyl-4-ethylphenol, estergruppenhaltige sterisch gehinderte Phenole, thioetherhaltige sterisch gehinderte Phenole, 2,2'-Methylen-bis-(4-methyl-6-tert-butylphenol) (BPH) sowie sterisch gehinderte Thiobisphenole verwendet.

Falls eine Verfärbung des Kautschuks ohne Bedeutung ist, können auch aminische Alterungsschutzmittel z. B. Mischungen aus Diaryl-p-phenylendiaminen (DTPD), octyliertes Diphenylamin (ODPA), Phenyl-α-naphthylamin (PAN), Phenyl-β-naphthylamin (PBN), vorzugsweise solche auf Phenylendiaminbasis, z. B. N-Isopropyl-N'-phenyl-p-phenylendiamin, N-1,3-Dimethylbutyl-N'-Phenyl-p-phenylendiamin (6PPD), N-1,4-Dimethylpentyl-N'-phenyl-p-phenylendiamin (7PPD), N,N-bis-(1,4-Diniethylpentyl)-p-phenylendiamin (77PD) eingesetzt werden.

Weitere Alterungsschutzmittel sind Phosphite wie Tris-(nonylphenyl)phosphit, polymerisiertes 2,2,4-Trimethyl-1,2-dihydrochinolin (TMQ), 2-Mercaptobenzimidazol (MBI), Methyl-2-Mercaptobenzimidazol (MMBI), Zinkmethylmercaptobenzimidazol (ZMMBI), weiche meist in Kombination mit obigen phenolischen Alterungsschutzmitteln eingesetzt werden.

Die Ozonbeständigkeit kann durch Antioxidantien wie beispielsweise N-1,3-Dimethylbutyl-N'-phenyl-p-phenylendiamin (6PPD), N-1,4-Dimethylpentyl-N-phenyl-p-phenylendiamin (7PPD), N,N'-Bis- (1,4-dimethylpentyl)-p-phenylendiamin (77PD), Enolether oder cyclische Acetale verbessert werden.

Verarbeitungshilfsmittel sollen zwischen den Kautschuk-Partikeln wirksam werden und Reibungskräften beim Mischen, Plastifizieren und Verformen entgegenwirken. Als Verarbeitungshilfsmittel können die erfindungsgemäßen Kautschukmischungen alle für die Verarbeitung von Kunststoffen üblichen Gleitmittel enthalten, wie beispielsweise Kohlenwasserstoffe, wie Öle, Paraffine und PE-Wachse, Fettalkohole mit 6 bis 20 C- Atomen, Ketone, Carbonsäuren, wie Fettsäuren und Montansäuren, oxidiertes PE-Wachs, Metallsalze von Carbonsäuren, Carbonsäureamide sowie Carbonsäureester, beispielsweise mit den Alkoholen Ethanol, Fettalkoholen, Glycerin, Ethandiol, Pentaerythrit und langkettigen Carbonsäuren als Säurekomponente.

Um die Entflammbarkeit zu vermindern und die Rauchentwicklung beim Verbrennen zu verringern, kann die erfindungsgemäße Kautschukmischungszusammensetzung auch Flammschutzmittel enthalten. Hierfür werden beispielsweise Antimontrioxid, Phosphorsäureester, Chlorparaffin, Aluminiumhydroxid, Borverbindungen, Zinkverbindungen, Molybdäntrioxid, Ferrocen, Calciumcarbonat oder Magnesiumcarbonat verwendet.

Vor der Vernetzung können der erfindungsgemäßen Kautschukmischung auch noch weitere Kunststoffe beigefügt werden, welche beispielsweise als polymere Verarbeitungshilfsmittel oder Schlagzähigkeitsverbesserer wirken. Diese Kunststoffe werden bevorzugt gewählt aus der Gruppe bestehend aus den Homo- und Copolymeren auf Basis von Ethylen, Propylen, Butadien, Styrol, Vinylacetat, Vinylchlorid, Glycidylacrylat, Glycidylmethacrylat, Acrylaten und Methacrylaten mit Alkoholkomponenten von verzweigten oder unverzweigten C1- bis C10-Alkoholen, wobei Polyacrylate mit gleichen oder verschiedenen Alkoholresten aus der Gruppe der C4- bis C8-Alkohole, insbesondere des Butanols, Hexanols, Octanols und 2-Ethylhexanols, Polymethylmethacrylat, Methylmethacrylat-Butylacrylat-Copolymere, Methylmethacrylat-Butylmethacrylat-Copolymere, Ethylen-Vinylacetat-Copolymere, chloriertes Polyethylen, Ethylen-Propylen-Copolymere, Ethylen-Propylen-Dien-Copolymere besonders bevorzugt sind.

Bekannte Haftsysteme basieren auf Resorcin, Formaldehyd und Silica, die sogenannten RFS-Direkthaftsysteme. Diese Direkthaftsysteme können in beliebiger Menge der erfindungsgemäßen Kautschukmischung, zu jedem Zeitpunkt des Einmischens in die erfindungsgemäße Kautschukmischung, eingesetzt werden.

Als Formaldehyd-Spender eignen sich neben Hexamethylentetramin auch Methylolamin-derivate. Eine mögliche Haftverbesserung wird durch Zugabe von zur Kunstharzbildung befähigten Komponenten wie Phenol und oder Amine und Aldehyde oder Aldehyde abspaltende Verbindungen zu den bekannten Kautschukmischungen erzielt. Eine breite Anwendung als Harzbildungskomponenten in Kautschukhaftmischungen finden Resorzin und Hexamethylentetramin (HEXA) (GB-PS 801 928, FR-PS 1 021 959), gegebenenfalls in Kombination mit Kieselsäurefüllstoff (DE-AS 1 078 320).

Bevorzugt sind erfindungsgemäße Kautschukmischungen enthaltend
- mindestens einen Polychloroprenkautschuk mit einer Molmassenverteilung Mw/Mn im Bereich von 2 bis 3, einer mittleren Molmasse (Mw) zwischen 4 · 10⁵ und 1,3 · 10⁶ g/Mol und einer Mooney-Viskosität zwischen 35 und 120 MU,
- 0,05 bis 15 phr an mindestens einem Polyethylenimin,
- 5 bis 200 phr an mindestens einer Kieselsäure, insbesondere mit einer spezifischen Oberfläche (BET) von 5 bis 1000, vorzugsweise 20 bis 400 m²/g und mit Primärteilchengrößen von 100 bis 400 nm,
   und/oder
- 5 bis 150 phr an mindestens einem Ruß, insbesondere mit einer spezifische Oberfläche (BET) im Bereich von 20 bis 200 m²/g.

Besonders bevorzugt sind erfindungsgemäße Kautschukmischungen enthaltend
- mindestens einen Chloroprenkautschuk mit einer Molmassenverteilung Mw/Mn im Bereich von 2 bis 3, einer mittleren Molmasse (Mw) zwischen 4 · 10⁵ und 1,3 · 10⁶ g/Mol und einer Mooney-Viskosität zwischen 35 und 120 MU,
- 0,5 bis 10 phr an mindestens einem Polyethylenimin,
- 10 bis 100 phr an mindestens einer Kieselsäure, insbesondere mit einer spezifischen Oberfläche (BET) von 5 bis 1000, vorzugsweise 20 bis 400 m²/g und mit Primärteilchengrößen von 100 bis 400 nm,
   und/oder
- 20 bis 120 phr an mindestens einem Ruß, insbesondere mit einer spezifische Oberfläche (BET) im Bereich von 20 bis 200 m²/g,
- 0,1 bis 5 phr an mindestens einem Vernetzer, insbesondere aus der Reihe der Metalloxide,
- 2 bis 10 Gew.-Teile an mindestens einem Verstärkungsadditive, insbesondere aus der Gruppe der schwefelhaltigen Silane, bezogen auf 100 Gew.-Teile an insgesamt in der Kautschukmischung enthaltene Füllstoffe,

Ein weiterer Gegenstand der vorliegenden Erfindung ist ein Verfahren zur Herstellung der erfindungsgemäßen Kautschukmischungen, dadurch gekennzeichnet dass mindestens einen Polychloropren-Kautschuk und mindestens ein Polyethylenimin, gegebenenfalls in Gegenwart von mindestens einem Füllstoff, gegebenenfalls mindestens einem Vernetzer, gegebenenfalls mindestens einem Vulkanisationsbeschleuniger oder -verzögerer, gegebenenfalls mindestens einem Verstärkungsadditiv und gegebenenfalls einem oder mehreren der oben genannten Kautschukhilfsmittel in den für diese Zusatzstoffe genannten allgemeinen und bevorzugten Mengen bei einer Temperatur im Bereich von 40 bis 200°C, besonders bevorzugt von 70 bis 130°C miteinander vermischt.

Die Herstellung der erfindungsgemäßen Kautschukmischungen erfolgt in üblicher Weise in bekannten Mischaggregaten, wie Walzen, Innenmischern, nachgeschalteten Mischwalzwerken und Mischextrudern bei Scherraten von 1 bis 1000 sec⁻¹, bevorzugt von 1 bis 100 sec⁻¹.

Vorzugsweise erfolgt die Zugabe von Polyethylenimin gegen Ende des Mischprozess bei tieferen Temperaturen im Bereich von 40 bis 100°C, üblicherweise zusammen mit den Vulkanisationsbeschleunigern oder -verzögerern.

Die vorliegende Erfindung betrifft weiterhin ein Verfahren zur Herstellung von Kautschukvulkanisaten, indem man eine erfindungsgemäße Kautschukmischung bei Massetemperaturen von 150 bis 280 °C, bevorzugt bei 170 bis 240 °C erhitzt.

Das Verfahren zur Herstellung der erfindungsgemäßen Kautschukvulkanisate kann in einem weiten Druckbereich durchgeführt werden, bevorzugt wird es bei einem Druck im Bereich von 1 bis 200 bar durchgeführt.

Weiterer Gegenstand der vorliegenden Erfindung sind Kautschukvulkanisate die erhältlich sind durch Vulkanisation einer erfindungsgemäßen Kautschukmischung.

Die Vulkanisation der erfindungsgemäßen Kautschukmischung kann mit Hilfe einer Presse, durch Spritzguss oder durch Salzbadvulkanisation erfolgen.

Das Erhitzen der Kautschukmischung zur Herstellung der erfindungsgemäßen Vulkanisate erfolgt üblicherweise mit Hilfe einer Mikrowelle, durch Heißluft, durch heißen Wasserdampf, im Salzbad oder in einem Autoklaven.

Weiterer Gegenstand der vorliegenden Erfindung sind Kautschukvulkanisate, die erhältlich sind durch Vulkanisation einer erfindungsgemäßen Kautschukmischung.

Die erfindungsgemäßen Vulkanisate eignen sich zur Herstellung diverser Kautschukprodukte, insbesondere für die Herstellung von technischen Gummiartikeln wie Schläuchen, Formartikeln, Kabeln und Leitungen, Riemen, Profilen, Fördergurten, Dämpfungselementen, Belägen für Walzen und gummierte Gewebe.

Die erfindungsgemäße Kautschukmischung kann weiterhin zur Herstellung von Schaumstoffen verwendet werden. Dazu werden ihr einer erfindungsgemäßen Kautschukmischung chemisch oder physikalisch wirkende Treibmittel zugefügt. Als chemisch wirkende Treibmittel kommen alle für diesen Zweck bekannten Substanzen in Betracht, wie beispielsweise Azodicarbonamid, p-Toluolsulfonylhydrazid, 4,4'-Oxybis(benzolsulfohydrazid), p-Toluolsulfonylsemicarbazid, 5-Phenyltetrazol sowie diese Substanzen enthaltende Mischungen. Als physikalisch wirkende Treibmittel sind beispielsweise Kohlendioxid oder Halogenkohlenwasserstoffe geeignet.

Gegenstand der vorliegenden Erfindung sind weiterhin Formkörper, insbesondere technische Gummiartikel wie Schläuche, Kabel, Leitungen, Riemen, Profile, Fördergurte, Dämpfungselemente, Beläge für Walzen und gummierte Gewebe sowie Schaumstoffe, enthaltend ein erfindungsgemäßes Kautschukvulkanisat.

Die Erfindung soll anhand der folgenden Beispiele erläutert werden, ohne diese jedoch darauf zu beschränken.

### Ausführungsbeispiele

### Liste der eingesetzten Produkte und Hersteller

| Handelsname | Erläuterung | Hersteller/Vertrieb |
|---|---|---|
| BAYPREN^{®} 211 MOONEY 35-43 | Polychloropren (CR) | Arlanxeo |
| REGAL^{®} SRF / N772 | Ruß | Cabot Corporation |
| PALMERA^{®} A9818 | Stearinsäure | KLK Oleo |
| RHENOCURE^{®} NPV/C | Ethylenthioharnstoff (ETU) | Lanxess Deutschland GmbH |
| RHENOCURE^{®} DR/S | Polyethylenimin CAS-Nr.: 9002-98-6 | Lanxess Deutschland GmbH |
| RHENOCURE^{®} CRV/LG | 3-Methyl-Thiazolidin-2-Thion (MTT) | Lanxess Deutschland GmbH |
| RHENOFIT^{®} D/A | Magnesiumoxid | Lanxess Deutschland GmbH |
| VULKANOX^{®} 4020/LG | N-1,3-Dimethylbutyl-N-phenyl-p-phenylendiamin | Lanxess Deutschland GmbH |
| ZINKWEISS ROTSIEGEL | Zinkoxid | Grillo Zinkoxid GmbH |

### Herstellung der erfindungsgemäßen Kautschukvulkanisate

Aus den in Tabelle 1 aufgeführten Kautschuk-Rezepturen des Beispiels 1 und der Referenzbeispiele Vergleich 1 bis Vergleich 3 wurden Vulkanisate hergestellt. Dazu wurden jeweils in einem Mischprozess, wie unten beschrieben, die in Tabelle 1 für das Beispiel 1 und die Referenzbeispiele angegebenen Bestandteile in den dort angegebenen Mengen (alle in "parts per 100 rubber" (phr)) gemischt.

Dabei wurde im Referenzbeispiel Vergleich 2 das Polyethylenimin (RHENOCURE^{®} DR/S) aus Beispiel 1 ersetzt durch Ethylenthioharnstoff (ETU) (als RHENOCURE^{®} NPV/C) und im Referenzbeispiel Vergleich 3 durch 3-Methyl-thiazolidin-2-thion (MTT) (RHENOCURE^{®} CRV/LG). Das Referenzbeispiel Vergleich 1 wurde ohne den Zusatz eines Vernetzungsmittels durchgeführt.

Es wurden jeweils zunächst in einem ersten Mischschritt der Polychlorpenkautschuk BAYPREN^{®} 211 in einem Kneter (GK 1,5) vorgelegt und die Additive REGAL^{®} SRF / N772, PALMERA^{®} A9818, und VULKANOX^{®} 4020/LG bei einer Temperatur von ca. 40°C und ca. 40 Umdrehungen pro Sekunde zugegeben. Die Mischung wurde bei einer Temperatur von 100 °C für ca. 3 Minuten gemischt.

Danach wurde in einem zweiten Mischschritt die Kautschukmischung auf eine temperierte Walze gegeben und die folgenden Additive ZINKOXID ROTSIEGEL, RHENOFIT^{®} D/A, sowie gemäß Beispiel 1 das RHENOCURE^{®} DR/S, gemäß Vergleich 2 das RHENOCURE^{®} NPV/C und gemäß Vergleich 3 das RHENOCURE^{®} CRV hinzugegeben und in die Kautschukmischung eingearbeitet. Die Walzentemperatur lag dabei zwischen 30 und 50 °C.

Die so hergestellten Kautschukmischungen wurden anschließend jeweils bei 180 °C und 200 °C aus-vulkanisiert und zu Prüfplatten gewalzt.

Diese Prüfplatten wurden für die anschließenden anwendungstechnischen Prüfungen wie unten angegeben verwendet.

**Tabelle 1: Rezepturen**

| Beispiele | **Bsp. 1** | **Vgl. 1** | **Vgl. 2** | **Vgl. 3** |
|---|---|---|---|---|
| BAYPREN^{®} 211 MOONEY 35-43 | 100 | 100 | 100 | 100 |
| REGAL^{®} SRF / N772 | 30 | 30 | 30 | 30 |
| PALMERA^{®} A9818 | 0,5 | 0,5 | 0,5 | 0,5 |
| VULKANOX^{®} 4020/LG | 2 | 2 | 2 | 2 |
| RHENOFIT^{®} D/A | 4 | 4 | 4 | 4 |
| ZINKWEISS ROTSIEGEL | 5 | 5 | 5 | 5 |
| RHENOCURE^{®} NPV/C | | | 1 | |
| RHENOCURE^{®} CRV/LG | | | | 1,7 |
| RHENOCURE^{®} DR/S | 4 | | | |

### Technische Prüfungen

Die hergestellten Kautschukmischungen und Vulkanisate wurden den unten angegebenen technischen Prüfungen unterzogen. Die ermittelten Werte sind den Tabellen 2 bis 4 zu entnehmen.

### Bestimmung der Eigenschaften von Kautschukmischung bzw. Vulkanisaten

### Mooney-Viskositätsmessung:

Die Bestimmung erfolgte mittels Scherscheibenviskosimeter gemäß ASTM D 1646. Die Viskosität lässt sich aus der Kraft, die Kautschuke (und Kautschukmischungen) ihrer Verarbeitung entgegensetzen, direkt bestimmen. Beim Scherscheibenviskosimeter nach Mooney wird eine geriffelte Scheibe oben und unten mit Probensubstanz umschlossen und in einer beheizbaren Kammer mit etwa zwei Umdrehungen in der Minute bewegt. Die hierzu erforderliche Kraft wird als Drehmoment gemessen und entspricht der jeweiligen Viskosität. Die Probe wird in der Regel eine Minute lang auf 100°C vorgewärmt; die Messung dauert weitere 4 Minuten, wobei die Temperatur konstant gehalten wird. Die Viskosität wird zusammen mit den jeweiligen Prüfbedingungen angegeben, beispielsweise ML (1+4) 100°C (Mooney Viskosität, Rotorgröße L, Vorwärmzeit und Prüfzeit in Minuten, Prüftemperatur).

### Rheometer (Vulkameter):

Der Vulkanisationsverlauf am MDR (moving die rheometer) und dessen analytischen Daten werden an einem Monsanto-Rheometer MDR 2000 nach ASTM D5289-95 gemessen. Als Ausvulkanisationszeit, wird die Zeit bestimmt, bei der 95% des Kautschuks vernetzt ist. Die Mischungen wurden bei 180 °C bis zu einem Umsatz von 95 % geheizt. Bei 200 °C betrug die Vulkanisationszeit 20 Minuten.

### Bruchdehnung, Zugfestigkeit, Modul 50, 100, 300:

Diese Messungen erfolgten nach DIN 53504 (Zugversuch, Stab S2, 5-fach Messung).

### Härte:

Messung der Shore Härte (Shore A) nach DIN 53505 bei 23 °C (3-fach Messung).

### Rückprallelastizität:

Messung der Rückprallelastizität bei 23 °C (3-fach Messung) nach DIN 53512.

### Druckverformungsrest (DVR):

Messung des Druckverformungsrestes nach 72 h bei 100 °C. Messung erfolgt nach DIN ISO 815.

**Tabelle 2: Physikalische Eigenschaften**

| | | **Vgl. 1** | **Vgl. 2** | **Vgl. 3** | **Bsp.1** |
|---|---|---|---|---|---|
| Delta S' (MDR200) | dNm | | 16,6 | 17,0 | 15,0 |
| Umsatzzeit 10% (MDR200) | [sec] | | 27 | 23 | 31 |
| Umsatzzeit 90% (MDR200) | [sec] | | 130 | 122 | 519 |
| Delta S' (MDR180) | dNm | 11,4 | 17,3 | 16,2 | 15,3 |
| Umsatzzeit 10% (MDR180) | [sec] | 94 | 42 | 32 | 50 |
| Umsatzzeit 90% (MDR180) | [sec] | 1530 | 266 | 118 | 980 |
| | | | | | |

| **Vulkanisation bei 200 °C** | | | | | |
|---|---|---|---|---|---|
| Härte Mittelwert | Shore A | 57,3 | 61,3 | 65,2 65,8 | |
| Rückprall Mittelwert | % | 53,8 | 57,5 | 61,3 | 57,9 |
| Modul 50 | MPa | 1,7 | 1,9 | 1,5 | 1,8 |
| Modul 100 | MPa | 3,1 | 3,9 | 3,0 | 3,9 |
| Modul 200 | MPa | 7,7 | 10,2 | 10,9 | 10,6 |
| Modul 300 | MPa | 14,2 | - | - | 16,7 |
| Zugbruchdehnung | % | 449 | 255 | 200 | 262 |
| Zugfestigkeit | MPa | 24,5 | 15,8 | 10,1 | 14,9 |
| DVR 72 h bei 100°C | % | 22,8 | 12,0 | 14,1 | 17,9 |

| **Vulkanisation bei 180 °C** | | | | | |
|---|---|---|---|---|---|
| Härte Mittelwert | Shore A | 51,4 | 47,1 | 61,5 | 61,8 |
| Rückprall Mittelwert | % | 55,1 | 59,4 | 60,5 | 58,2 |
| Modul 50 | MPa | 1,2 | 1,6 | 2,1 | 1,9 |
| Modul 100 | MPa | 2 | 3 | 4,2 | 4 |
| Modul 200 | MPa | 5,2 | 8,7 | 11,1 | 10,8 |
| Modul 300 | MPa | 10,7 | 18,2 | 19,5 | 17,2 |
| Zugbruchdehnung | % | 574 | 340 | 293 | 354 |
| Zugfestigkeit | MPa | 26,5 | 22,3 | 19,1 | 19,9 |
| DVR 72 h bei 100°C | % | 28,4 | 15,9 | 23,9 | 21,5 |

**Tabelle 2: Änderung der physikalischen Eigenschaften in [%] hervorgerufen durch unterschiedliche Heiztemperaturen bei der Ausvulkanisation (180 °C vs. 200 °C)**

| | | **Vgl. 1** | **Vgl. 2** | **Vgl. 3** | **Bsp.1** |
|---|---|---|---|---|---|
| Modul 50 | MPa | 29% | 16% | 40% | 6% |
| Modul 100 | MPa | 35% | 23% | 40% | 3% |
| Modul 200 | MPa | 32% | 19% | 8% | 2% |
| Modul 300 | MPa | 25% | | | 3% |
| Zugbruchdehnung | % | 28% | 33% | 47% | 35% |
| Zugfestigkeit | MPa | 8% | 41% | 89% | 34% |
| Härte Mittelwert | Shore A | 10% | 23% | 6% | 6% |
| Rückprall Mittelwert | % | 2% | 3% | 1% | 0% |
| DVR 72 h bei 100 °C | % | 25% | 32% | 69% | 20% |

Es wurden Vulkanisate von den Referenzbeispielen Vergleich 1, Vergleich 2 und Vergleich 3, sowie von dem erfindungsgemäßen Beispiel 1 jeweils bei 180 °C und bei 200 °C Vulkanisationstemperatur erzeugt.

Ein Vergleich der ermittelten Werte des erfindungsgemäßen Beispiels 1 mit den Werten der Referenzbeispiele Vergleich 1, Vergleich 2 und Vergleich 3 zeigt, dass die Vernetzungsgeschwindigkeit (als Maß dafür wird die Umsatzzeit 90% betrachtet) sowohl bei 180 °C als auch bei 200 °C mit Hilfe von PEI zwar langsamer ist als mit ETU oder MTT (Beispiel 2 und 3, Tabelle 2), aber am Ende werden vergleichbare Delta-Torque-Werte (Delta S') erreicht, die ein auf ein vergleichbares Vernetzungsniveau hinweisen. Das Referenzbeispiel Vergleich 1 ohne zusätzliche Vernetzungschemikalien zeigt hingegen ein deutlich niedrigeren Delta S'-Wert und damit eine niedrigere Vernetzungsdichte des Vulkanisates.

Für alle Vulkanisate wurden Zugversuche durchgeführt. Auch hier deuten die vergleichbaren Werte bei Modul 200 und Modul 300 auf eine vergleichbare Vernetzungsdichte der Referenzbeispiele Vergleich 2 und Vergleich 3 sowie des erfindungsgemäßen Beispiels 1 hin. Und auch hier erscheint das Referenzbeispiel des Vergleichs 1 deutlich weniger stark vernetzt zu sein als die Vergleiche 2 und 3 sowie Beispiel 1.

Die Zugbruchdehnung und Zugfestigkeit von Beispiel 1 zeigt gute Werte im Vergleich zu Vergleichsbeispiel 2 und 3. Die Werte von Vergleichsbeispiel 1 liegen erwartungsgemäß auf einem deutlich höheren Niveau aufgrund der geringeren Vernetzung.

Die Druckverformungsrestwerte (72 h bei 100 °C) sind im Beispiel 1 geheizt bei 200 °C besser als die Vergleichsbeispiele 1 und 3 aber etwas schlechter als Vergleichsbeispiel 2.

Der deutliche Vorteil von Beispiel 1 gegenüber den Vergleichsbeispielen zeigt sich in der Stabilität gegenüber der Heiztemperatur, verdeutlicht durch die prozentuale Änderung der physikalischen Eigenschaften, wie aus Tabelle 2 hervorgeht. Hier zeigt Beispiel 1 eine deutlich kleinere Veränderung der Werte verglichen mit den Vergleichsbeispielen 1 bis 3.

**Tabelle 4: Physikalische Eigenschaften nach Alterung (7 Tage bei 100°C).**

| | | **Vgl. 1** | **Vgl. 2** | **Vgl. 3** | **Bsp.1** |
|---|---|---|---|---|---|
| **Vulkanisation bei 180 °C** | | | | | |
| Härte Mittelwert | Shore A | 64 | 64 | 65 | 67 |
| Modul 50 | MPa | 2,2 | 2 | 2,4 | 2,5 |
| Modul 100 | MPa | 4,4 | 3,9 | 4,5 | 5,2 |
| Modul 200 | MPa | 11,4 | 10,9 | 12,2 | 12,7 |
| Modul 300 | MPa | 20,2 | 20,8 | - | 19,4 |
| Zugbruchdehnung | % | 337 | 311 | 289 | 302 |
| Zugfestigkeit | MPa | 22,7 | 22 | 21,4 | 20,2 |
| Rückprall Mittelwert | % | 56,7 | 58,5 | 58,2 | 58,3 |

| **Vulkanisation bei 200 °C** | | | | | |
|---|---|---|---|---|---|
| Härte Mittelwert | Shore A | 62,9 | 63,6 | 68,0 | 67,5 |
| Modul 50 | MPa | 2,2 | 2,3 | 2 | 2 |
| Modul 100 | MPa | 4,4 | 4,6 | 3,8 | 4,3 |
| Modul 200 | MPa | 11,4 | 12,4 | 10,7 | 11,3 |
| Modul 300 | MPa | 20,9 | - | - | - |
| Zugbruchdehnung | % | 328 | 283 | 192 | 283 |
| Zugfestigkeit | MPa | 23 | 21,4 | 10,5 | 17,6 |
| Rückprall Mittelwert | % | 55,5 | 57,3 | 61,5 | 59,0 |

**Tabelle 5: Änderung der physikalischen Eigenschaften [%] nach Alterung (7 Tage bei 100°C).**

| | | **Vgl. 1** | **Vgl. 2** | **Vgl. 3** | **Bsp.1** |
|---|---|---|---|---|---|
| **Vulkanisation bei 180 °C** | | | | | |
| Δ Härte Mittelwert | % | 24% | 36% | 6% | 8% |
| Δ Modul 50 | % | 83% | 25% | 14% | 32% |
| Δ Modul 100 | % | 120% | 30% | 7% | 30% |
| Δ Modul 200 | % | 117% | 24% | 10% | 18% |
| Δ Modul 300 | % | 89% | 14% | - | 13% |
| Δ Zugbruchdehnung | % | -41% | -9% | -1% | -15% |
| Δ Zugfestigkeit | % | -14% | -1% | 12% | 2% |
| Δ Rückprall Mittelwert | % | 3% | -2% | -4% | 0% |

| **Vulkanisation bei 200 °C** | | | | | |
|---|---|---|---|---|---|
| Δ Härte Mittelwert | % | 10% | 4% | 4% | 3% |
| Δ Modul 50 | % | 29% | 21% | 33% | 11% |
| Δ Modul 100 | % | 42% | 18% | 27% | 10% |
| Δ Modul 200 | % | 48% | 14% | 5% | 7% |
| Δ Modul 300 | % | 47% | - | - | - |
| Δ Zugbruchdehnung | % | -27% | 11% | -4% | 8% |
| Δ Zugfestigkeit | % | -6% | 35% | 4% | 18% |
| Δ Rückprall Mittelwert | % | 3% | 0% | 0% | 2% |

Lagerung der Kautschukvulkanisate bei 100 °C für 7 Tage an Luft führt erwartungsgemäß zu einer Versteifung der Mischungen. Vulkanisate des Beispiels 1 zeigen bei einer Vulkanisationstemperatur von 200 °C eine besonders hohe Stabilität gegenüber Alterung im Vergleich zu den 3 Vergleichsbeispielen, verdeutlicht durch die Änderung der physikalischen Eigenschaften, insbesondere durch die relativ kleine Veränderung der Modul Werte (siehe Tabelle 5).

## Patentansprüche

1. Kautschukmischung, **dadurch gekennzeichnet, dass** sie mindestens einen Polychloroprenkautschuk (CR) und mindestens ein Polyethylenimin enthält.

2. Kautschukmischung gemäß Anspruch 1, **dadurch gekennzeichnet, dass** sie Polyethylenimin in einer Menge von 0,01 bis 20 phr, bevorzugt von 0,05 bis 15 phr, besonders bevorzugt von 0,5 bis 10 phr, ganz besonders bevorzugt von 1 bis 8 phr und insbesondere von 2 bis 6 phr enthält.

3. Kautschukmischung gemäß Anspruch 1 oder 2, **dadurch gekennzeichnet, dass** der Polychloroprenkautschuk eine Molmassenverteilung Mw/Mn im Bereich von 2 bis 3 und eine mittlere Molmasse (Mw) zwischen 4 · 10⁵ und 1,3 · 10⁶ g/Mol aufweist.

4. Kautschukmischung gemäß einem der Ansprüche 1 bis 3, **dadurch gekennzeichnet, dass** sie mindestens einen hydroxylgruppenhaltigen oxidischen Füllstoff in einer Menge von 0,1 bis 250 phr, vorzugsweise 1 bis 200 phr, besonders bevorzugt 5 bis 180 phr und ganz besonders bevorzugt 10 bis 160 phr enthält.

5. Kautschukmischung gemäß einem der Ansprüche 1 bis 4, **dadurch gekennzeichnet, dass** sie mindestens einen Ruß in einer Menge von 0,1 bis 200 phr, vorzugsweise 5 bis 150 phr, besonders bevorzugt 20 bis 120 phr enthält.

6. Kautschukmischung gemäß einem der Ansprüche 1 bis 5, **dadurch gekennzeichnet, dass** sie mindestens einen Vernetzer, vorzugsweise aus der Reihe der Metalloxide enthält.

7. Kautschukmischung gemäß einem der Ansprüche 1 bis 6, **dadurch gekennzeichnet, dass** sie mindestens ein Verstärkungsadditiv aus der Reihe der schwefelhaltigen organischen Silane, insbesondere der Alkoxysilylgruppen-haltigen schwefelhaltigen Silane enthält.

8. Kautschukmischung gemäß einem der Ansprüche 1 bis 7, **dadurch gekennzeichnet, dass** sie mindestens einen Vulkanisationsbeschleuniger aus der Reihe der Merkaptobenzothiazole, Merkaptobenzoimidazole, Thiazolsulfenamide, Thiurame, Thiocarbamate, Tolytriazole, Xanthogenate und Thiophosphate enthält.

9. Kautschukmischung gemäß einem der Ansprüche 1 bis 8, **dadurch gekennzeichnet, dass** sie mindestens ein Kautschukhilfsmittel aus der Reihe der Haftsysteme, Alterungsschutzmittel, Wärmestabilisatoren, Lichtschutzmittel, Antioxidantien, insbesondere Ozonschutzmittel, Flammschutzmittel, Verarbeitungshilfsmittel, Schlagzähfestigkeitsverbesserer, Faktisse, Weichmacher, Tackifier, Treibmittel, Farbstoffe, Pigmente, Wachse, Streckmittel, organische Säuren, Verzögerer, Aktivatoren und Reversionsschutzmittel enthält.

10. Verwendung von Polyethylenimin als Vernetzungsmittel für Kautschukmischungen auf Basis von Polychlorprenkautschuk.

11. Verfahren zur Herstellung einer Kautschukmischung gemäß einem der Ansprüche 1 bis 9, **dadurch gekennzeichnet dass** man mindestens einen Polychloropren-Kautschuk und mindestens ein Polyethylenimin, gegebenenfalls in Gegenwart von mindestens einem Füllstoff, gegebenenfalls mindestens einem Vernetzer, gegebenenfalls mindestens einem Vulkanisationsbeschleuniger oder -verzögerer, gegebenenfalls mindestens einem Verstärkungsadditiv und gegebenenfalls einem oder mehreren Kautschukhilfsmitteln bei einer Temperatur im Bereich von 40 bis 200°C, besonders bevorzugt von 70 bis 130°C miteinander vermischt.

12. Kautschukvulkanisat erhältlich durch Vulkanisation einer Kautschukmischung gemäß einem der Ansprüche 1 bis 9.

13. Verfahren zur Herstellung eines Kautschukvulkanisats, **dadurch gekennzeichnet, dass** man mindestens eine Kautschukmischung gemäß einem der Ansprüche 1 bis 9 auf eine Temperatur im Bereich von 150 bis 240 °C, bevorzugt von 180 bis 220 °C erhitzt.

14. Formkörper, insbesondere technische Gummiartikel wie Schläuche, Kabel, Leitungen, Riemen, Profile, Fördergurte, Dämpfungselemente, Beläge für Walzen und gummierte Gewebe sowie Schaumstoffe, enthaltend ein Kautschukvulkanisat gemäße Anspruch 12.
